# EUROPEAN PATENT APPLICATION

(11) **EP 2 360 971 A2**
(43) Date of publication of application: **24.08.2011**
(21) Application number: 11000953.7
(22) Date of filing: 07.02.2011
(51) Int. Cl.: H04W 48/10

(54) **Providing GNSS assistance data via a wireless LAN access point**

(30) Priority: 12.02.2010 US 304128 P; 26.03.2010 US 748159
(71) Applicant: Broadcom Corporation, Irvine, CA 92617 (US)
(72) Inventor: Karaoguz, Jeyhan, Irvine, CA 92606 (US); Buer, Mark, Irvine, CA 92617 (US); Lundgren, David, Albert, Mill Valley CA 94941 (US); Abraham, Charles, Los Gatos CA 95033 (US); Garrett, David, Tustin CA 92782 (US); Murray, David, Mission Viejo CA 92692 (US)
(74) Representative: Jehle, Volker Armin

(57) **Abstract**

A wireless mobile device, either a WLAN enabled mobile device or a Bluetooth enable device, which is within range of a WLAN access point, is operable to receive GNSS assistance data broadcasted from the WLAN access point. The GNSS assistance data are acquired by the WLAN access point from a reference database coupled to a location server. The broadcast GNSS assistance data comprise ephemeris data, LTO data, location information related to the WLAN access point and/or time information. The WLAN access point receives the acquired GNSS assistance data from the location server over a broadband IP network. The WLAN access point selects available resources for broadcasting the received GNSS assistance data to wireless mobile devices in range. The wireless mobile device receives the broadcast GNSS assistance data to calculate its own location. The calculated location of the wireless mobile device is used to update or refine the reference database.

## Description

### CROSS-REFERENCE TO RELATED APPLICATIONS/INCORPORATION BY REFERENCE

This patent application makes reference to, claims priority to and claims the benefit from United States Provisional Patent Application Serial No. 61/304,128 filed on February 12, 2010.

This patent application makes reference to:
United States Application Serial No. 61/303,931 filed on February 12, 2010,
United States Application Serial No. 61/303,975 filed on February 12, 2010,
United States Application Serial No. 61/305,758 filed on February 18, 2010,
United States Application Serial No. (Attorney Docket No. 21013US02) filed on even date herewith,
United States Application Serial No. (Attorney Docket No. 21015US02) filed on even date herewith, and
United States Application Serial No. (Attorney Docket No. 21026US02) filed on even date herewith.

Each of the above stated applications is hereby incorporated herein by reference in its entirety.

### FIELD OF THE INVENTION

Certain embodiments of the invention relate to communication systems. More specifically, certain embodiments of the invention relate to a method and system for providing GNSS assistance data via a wireless LAN access point.

### BACKGROUND OF THE INVENTION

Location-based service (LBS) is a value-added service provided by various wireless networks such as 3GPP, 3GPP2 and WiMAX. Knowing a user's location enables various LBS applications such as, for example, enhanced 911 (E-911), location-based 411, location-based messaging and/or friend finding. A user's location is determined in different ways, for example, using mobile-based and/or network-based location technologies. In mobile-based outdoor location systems, a mobile device typically determines its location using various measurements such as the angle of arrival (AOA), time of arrival (TOA) and the time difference of arrival (TDOA). The mobile device utilizes the determined locations for LBS applications. However, the reliability of these measurements may suffer from the complex signal propagation environments. Network-based location technology, on the other hand, relies on some existing, for example, 3GPP, 3GPP2, WiMAX and wireless local area networks (WLAN) to determine the position of a mobile device of interest. Specifically, the increased deployment and the popularity of WLAN have opened a new opportunity to provide the location of mobile devices in indoor environments to support for LBS applications.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and/or system for providing GNSS assistance data via a wireless LAN access point, substantially as shown in and/or described in connection with at least one of the figures, as set forth more completely in the claims.
According to an aspect, a method for communication is provided, the method comprising:
performing by one or more processors and/or circuits in a wireless mobile device, wherein whenever said wireless mobile device is within range of a wireless local area network (WLAN) access point:
   receiving Global Navigation Satellite Systems (GNSS) assistance data broadcasted from said WLAN access point, wherein said GNSS assistance data are acquired by said WLAN access point from an associate network and/or a reference database that is communicatively coupled to a location server.
Advantageously, said wireless mobile device is a WLAN enabled mobile device and/or a Bluetooth enabled mobile device.
Advantageously, said broadcast GNSS assistance data comprise ephemeris data, long term orbit (LTO) data, location information related to said WLAN access point and/or time information.
Advantageously, said WLAN access point receives said acquired GNSS assistance data from said location server over a broadband IP network.
Advantageously, said WLAN access point selects available resources for broadcasting said received GNSS assistance data.
Advantageously, said WLAN access point broadcasts said received GNSS assistance data over said selected available resources.
Advantageously, the method further comprises receiving said broadcast GNSS assistance data from said WLAN access point over said selected available resources.
Advantageously, the method further comprises calculating location of said wireless mobile device using said received broadcast GNSS assistance data.
Advantageously, the method further comprises communicating said calculated location of said wireless mobile device to said location server.
Advantageously, said location server updates said reference database using said calculated location of said wireless mobile device.
According to an aspect, a system for communication comprises:
one or more processors and/or circuits for use in a wireless mobile device, wherein:
   whenever said wireless mobile device is within range of a wireless local area network (WLAN) access point, said one or more processors and/or circuits are operable to receive Global Navigation Satellite Systems (GNSS) assistance data broadcasted from said WLAN access point; and
   said GNSS assistance data are acquired by said WLAN access point from a reference database communicatively coupled to a location server.
Advantageously, said wireless mobile device is a WLAN enabled mobile device or a Bluetooth enabled mobile device.
Advantageously, said broadcast GNSS assistance data comprise ephemeris data, long term orbit (LTO) data, location information related to said WLAN access point and/or time information.
Advantageously, said WLAN access point receives said acquired GNSS assistance data from said location server over a broadband IP network.
Advantageously, said WLAN access point selects available resources for broadcasting said received GNSS assistance data.
Advantageously, said WLAN access point broadcasts said received GNSS assistance data over said selected available resources.
Advantageously, said one or more processors and/or circuits are operable to receive said broadcast GNSS assistance data from said WLAN access point over said selected available resources.
Advantageously, said one or more processors and/or circuits are operable to calculate location of said wireless mobile device using said received broadcast GNSS assistance data.
Advantageously, said one or more processors and/or circuits are operable to communicate said calculated location of said wireless mobile device to said location server.
Advantageously, said location server updates said reference database using said calculated location of said wireless mobile device.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a diagram illustrating an exemplary communication system that is operable to provide GNSS assistance data via a wireless LAN access point, in accordance with an embodiment of the invention.

FIG. 2 is a block diagram illustrating an exemplary wireless LAN access point that is operable to broadcast GNSS assistance data over available resources, in accordance with an embodiment of the invention.

FIG. 3 is a block diagram illustrating an exemplary location server that is operable to provide GNSS assistance data to an intended wireless LAN access point, in accordance with an embodiment of the invention.

FIG. 4 is a flow chart illustrating an exemplary procedure that is utilized to provide GNSS assistance data via a wireless LAN access point, in accordance with an embodiment of the invention.

### DETAILED DESCRIPTION OF THE INVENTION

Certain embodiments of the invention may be found in a method and system for providing GNSS assistance data via a wireless LAN access point. In various embodiments of the invention, a wireless mobile device, either a WLAN enabled mobile device or a Bluetooth enabled device that is within range of a WLAN access point is operable to receive GNSS assistance data broadcasted from the WLAN access point. The GNSS assistance data are acquired by the WLAN access point from a reference database coupled to a location server. The broadcast GNSS assistance data may comprise, for example, ephemeris data, LTO data, location information related to the WLAN access point and/or time information. The WLAN access point may be operable to receive the acquired GNSS assistance data from the location server over a broadband IP network. The WLAN access point may be operable to select available resources such as a field reserved in the Beacon Field on an operating WiFi channel for broadcasting the received GNSS assistance data. The WLAN access point may be operable to broadcast the received GNSS assistance data over the selected resources to wireless mobile devices in range. The wireless mobile device may be operable to receive the broadcast GNSS assistance data from the WLAN access point over the selected resources. The wireless mobile device may be operable to calculate its own location using the received broadcast GNSS assistance data. The calculated location may be communicated to the location server, where it may be utilized to update and/or refine related information in the reference database.

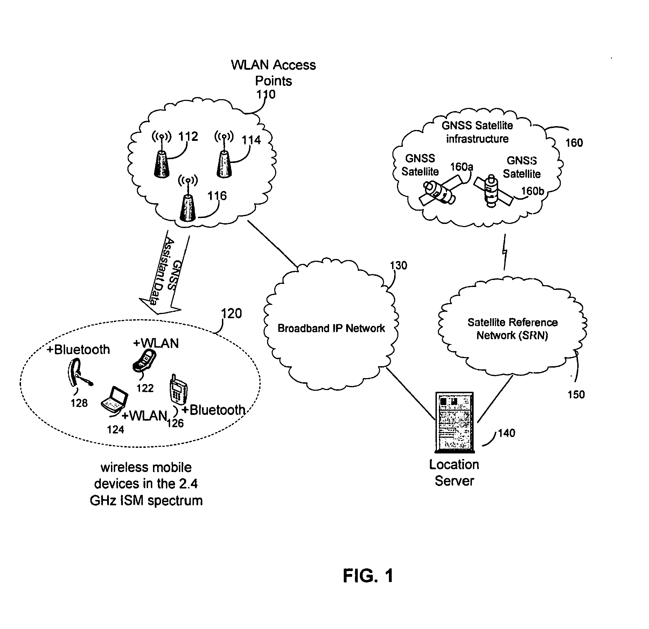

FIG. 1 is a diagram illustrating an exemplary communication system that is operable to provide GNSS assistance data via a wireless LAN access point, in accordance with an embodiment of the invention. Referring to FIG. 1, there is shown a communication system 100. The communication system 100 comprises a plurality of WLAN access points 120, of which WLAN access points 112-116 are illustrated, a plurality of wireless mobile devices 120, the broadband IP network 130, a location server 140, a satellite reference network (SRN) 150 and a Global Navigation Satellite Systems (GNSS) satellite positioning infrastructure 160. The plurality of wireless mobile devices 120 operate in 2.4GHz ISM spectrum and comprise WLAN enabled mobile devices 122-124 and Bluetooth enabled mobile devices 126-128. The GNSS satellite positioning infrastructure 160 comprises a plurality of GNSS satellites, of which GNSS satellites 160a-160b are illustrated.

A WLAN access point such as the WLAN access point 112 may comprise suitable logic, circuitry, interfaces and/or code that are operable to provide data services to various WLAN enabled mobile devices such as the WLAN enabled mobile devices 122-124 by using wireless LAN technology. Exemplary wireless LAN technology may comprise, for example, IEEE Std 802.11, 802.11a, 802.11b, 802.11d, 802.11e, 802.11n, 802.11v, and/or 802.11u. The WLAN access point 112 may be operable to communicate with the location server 140 over the Internet 130 to acquire GNSS assistance data. The acquired GNSS data may comprise, for example, ephemeris data, long term orbit (LTO) data, location of the WLAN access point 112 and/or time information. In this regard, the WLAN access point 112 may be operable to provide the acquired GNSS assistance data to wireless mobile devices, which operate in the 2.4 GHz ISM spectrum, within range. The wireless mobile devices may be, for example, the WLAN enabled mobile devices 122-124 and/or the Bluetooth enabled mobile devices 126-128. The WLAN access point 112 may be operable to select available resources such as a field reserved in the Beacon Field on an operating WiFi channel. The acquired GNSS assistance data may be broadcasted over the selected resources to the wireless mobile devices within the range, for example, the WLAN enabled mobile devices 122-124 and the Bluetooth enabled mobile devices 126-128. The WLAN access point 112 may be operable to broadcast the acquired GNSS assistance data as a needed base or periodically.

A wireless mobile device such as the WLAN enabled mobile device 122 and the Bluetooth enabled mobile device 126 may comprise suitable logic, circuitry, interfaces and/or code that are enabled to operate in 2.4 GHz ISM spectrum. The WLAN enabled mobile device 122 and the Bluetooth enabled mobile device 126 may be operable to receive and/or transmit radio frequency signals using WLAN and Bluetooth air interface protocols, respectively. The WLAN enabled mobile device 122 and the Bluetooth enabled mobile device 126 may be operable to receive signals in 2.4 GHz ISM spectrum. The received signals may be comprise, for example, broadcast signals transmitted from the WLAN access point 112. The received broadcast signals may comprise GNSS assistance data, which are acquired by the WLAN access point 112 from the location server 140 over the broadband IP network 130. The received GNSS assistance data may comprise, for example, ephemeris data, long term orbit (LTO) data, location information related to the WLAN access point 112 and/or time information. The WLAN enabled mobile device 122 and/or the Bluetooth enabled mobile device 126 may be operable to utilize the received GNSS assistance data to generate or calculate its own navigation information such as a location, velocity, and time information of the WLAN enabled mobile device 122 and/or the Bluetooth enabled mobiie device 126. The generated navigation information may be utilized to support corresponding LBS applications running on the WLAN enabled mobile device 122 and/or the Bluetooth enabled mobile device 126, respectively. Furthermore, the generated navigation information may be also be communicated with the location server 140 such that related location information of the WLAN enabled mobile device 122 and/or the Bluetooth enabled mobile device 126 may be refined or updated.

The broadband IP network 130 may comprise suitable logic, circuitry, interfaces and/or code that are operable to distribute content of various mobile services over the Internet. The broadband IP network 130 may be operable to deliver a variety of mobile services over broadband to users efficiently and cost-effectively. The broadband IP network 130 may be operable to provide broadband IP connections to enable various WLAN access points such as the WLAN access point 112 to communicate with the location server 140. The broadband IP connections may comprise, for example, a digital subscriber line (DSL) and/or a T1/E1 line.

The location server 140 may comprise suitable logic, circuitry, interfaces and/or code that are operable to access the satellite reference network (SRN) 150 to collect GNSS satellite data by tracking GNSS constellations through the SRN 150. The location server 140 may be operable to utilize the collected GNSS satellite data to generate GNSS assistance data comprising, for example, ephemeris data, LTO data, reference positions and/or time information, to be provided to associated users. For example, the location server 140 may be operable to receive requests for GNSS assistance data from, for example, the WLAN access point 122. In response, the location server 140 may be operable to identify reference positions of the WLAN access point 122. The identified reference positions of the WLAN access point 122 together with, for example, ephemeris data, LTO data, and/or time information may be utilized to generate GNSS assistance data. The location server 140 may be operable to communicate the generated GNSS assistance data to the WLAN access point 122 over the broadband IP network 130. The location server 140 may be configured to communicate information with the WLAN access point 122 via a user-plane and/or a control-plane.

The SRN 150 may comprise suitable logic, circuitry, interfaces and/or code that are operable to collect and/or distribute data for GNSS satellites on a continuous basis. The SRN 150 may comprise a plurality of GNSS reference tracking stations located around the world to provide assistant GNSS (A-GNSS) coverage all the time in both a home network and/or any visited network.

The GNSS satellites 160a through 160b may comprise suitable logic, circuitry, interfaces and/or code that may be operable to generate and broadcast satellite navigational information. The broadcast satellite navigational information may be collected by the SRN 150 to be utilized by the location server 140 to enhance LBS services. The GNSS satellites 160a through 160b may comprise GPS, Galileo, and/or GLONASS satellites.

In an exemplary operation, a wireless mobile device such as the WLAN enabled mobile device 122 and the Bluetooth enabled mobile device 126 may be operable to receive and/or transmit signals in the 2.4 GHz ISM spectrum. In instances where the WLAN enabled mobile device 122 and the Bluetooth enabled mobile device 126 may be located in a geographical area covered by the WLAN access point 122, the received signals may be comprise, for example, broadcast GNSS assistance data transmitted from the WLAN access point 112. The broadcast GNSS assistance data may be acquired by the WLAN access point 112 from the location server 140 over the broadband IP network 130. The broadcast GNSS assistance data may comprise, for example, ephemeris data, long term orbit (LTO) data, location information related to the WLAN access point 112 and/or time information. The broadcast GNSS assistance data may be utilized by the WLAN enabled mobile device 122 and/or the Bluetooth enabled mobile device 126 to calculate its own navigation or position information such as a location, velocity, and time information. The WLAN enabled mobile device 122 and/or the Bluetooth enabled mobile device 126 may be operable to utilize the calculated navigation information to enhance corresponding LBS applications.

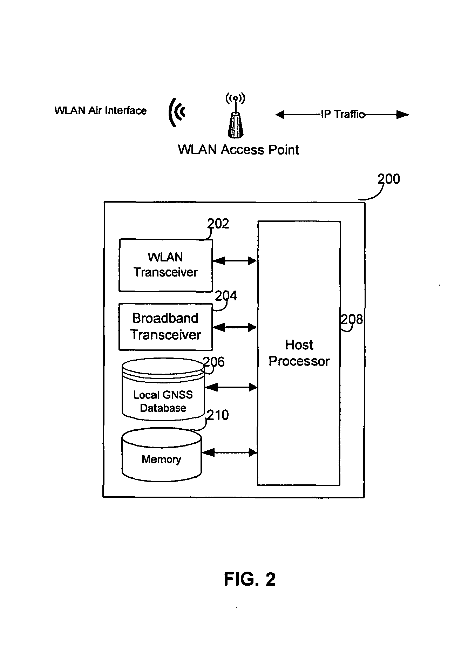

FIG. 2 is a block diagram illustrating an exemplary wireless LAN access point that is operable to broadcast GNSS assistance data over available resources such as a field reserved in the Beacon Field on an operating WiFi channel, in accordance with an embodiment of the invention. Referring to FIG. 2, there is shown a WLAN access point 200. The WLAN access point 200 comprises a WLAN transceiver 202, a broadband transceiver 204, a local GNSS database 206, a host processor 208, and a memory 210.

The WLAN transceiver 202 may comprise suitable logic, circuitry, interfaces and/or code that may be operable to receive and/or transmit radio frequency signals using wireless LAN technology. The WLAN transceiver 202 may be operable to transmit and/or receive radio frequency (RF) signals with various WLAN enabled mobile devices such as the WLAN enabled mobile devices 122-124. In this regard, the WLAN transceiver 202 may be configured to broadcast GNSS assistance data to wireless mobile devices within range. The broadcast GNSS assistance data comprise, for example, ephemeris data, LTO data, location information related to the WLAN access point 200 and/or time information. The broadcast GNSS assistance data may be acquired via the broadband transceiver 204 from the location server 140.

The broadband transceiver 204 may comprise suitable logic, circuitry, interfaces and/or code that may be operable to transmit voice and/or data in adherence to one or more internet protocol (IP) broadband standard. The broadband transceiver 204 may be operable to communicate voice and/or data with the broadband IP network 130 over a T1/E1 line, DSL, cable television infrastructure, satellite broadband internet connection, satellite television infrastructure, and/or Ethernet. The broadband transceiver 204 may be operable to communicate with the location server 140 via the broadband IP network 130. The broadband transceiver 204 may be operable to receive GNSS assistance data from the location server 140 to be broadcast to wireless mobile devices such as the WLAN within range via the WLAN enabled mobile device 122 and the Bluetooth enabled mobile device 126 within range.

The local GNSS database 206 may comprise suitable logic, circuitry, interfaces and/or code that may be operable to manage and store data comprising location related information of the WLAN access point 200. The contents in the local GNSS database 206 may be used to calculate the location of the WLAN access point 200. The contents in the local GNSS database 206 may be broadcast to wireless mobile devices within range for corresponding WLAN locating. The local GNSS database 206 may be updated as needed, aperiodically, or periodically. The local GNSS database 206 may be stored in RAM, ROM, low latency nonvolatile memory such as flash memory and/or other suitable electronic data storage capable of storing data and instructions.

The host processor 208 may comprise suitable logic, circuitry, interfaces and/or code that may be operable to manage and control operations of, for example, the WLAN transceiver 202 and the broadband transceiver 204. The host processor 208 may be operable to send a request for GNS assistance data to the location server 140 via the broadband transceiver 204. The host processor 208 may be operable to manage and distribute GNSS assistance data received from the location server 140 to users. In this regard, the host processor 208 may be operable to broadcast the received GNSS assistance data to wireless mobile devices in range via the WLAN transceiver 202.

The memory 210 may comprise suitable logic, circuitry, interfaces and/or code that may be operable to store information such as executable instructions and data that may be utilized by the host processor 208 and/or other associated component units such as, for example, the WLAN transceiver 202 and the broadband transceiver 204. The memory 210 may comprise RAM, ROM, low latency nonvolatile memory such as flash memory and/or other suitable electronic data storage.

In an exemplary operation, the host processor 208 may be operable to manage and control operations of the WLAN transceiver 202 and the broadband transceiver 204 depending on corresponding usages. For example, the host processor 208 may be operable to receive one or more requests from WLAN enabled mobile devices such as the WLAN enabled mobile device 122 for GNSS assistance data. The host processor 208 may be operable to communicate the requests with the location server 140 via the broadband transceiver 204. The host processor 208 may be operable to receive GNSS assistance data via the broadband transceiver 204 from the location server 140. The received GNSS assistance data may be stored in the local GNSS database 206 that comprises a memory and/or storage device communicatively coupled to the WLAN access point 200. The host processor 208 may be operable to detect or identify available resources such as a field reserved in the Beacon Field on an operating WiFi channel such that the stored GNSS assistance data may be broadcast to wireless mobile devices within range over the detected available resources. The host processor 208 may be operable to broadcast the stored GNSS assistance data when need or periodically.

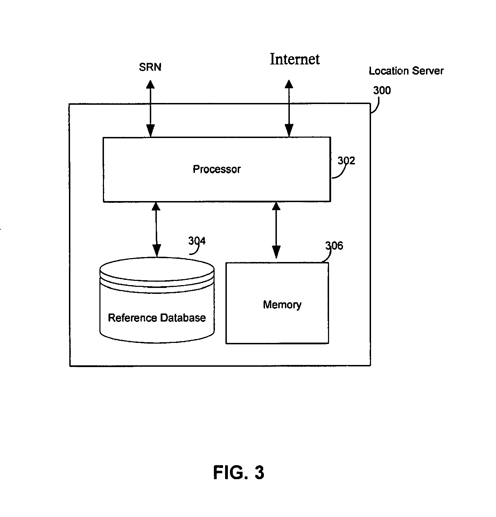

FIG. 3 is a block diagram illustrating an exemplary location server that is operable to provide GNSS assistance data to an intended wireless LAN access point, in accordance with an embodiment of the invention. Referring to FIG. 3, there is shown a location server 300. The location server 300 may comprise a processor 302, a reference database 304 and a memory 306.

The processor 302 may comprise suitable logic, circuitry, interfaces and/or code that may be operable to manage and/or control operations of the reference database 304 and the memory 306. The processor 302 may be operable to communicate with the satellite reference network (SRN) 150 so as to collect GNSS satellite data by tracking GNSS constellations through the SRN 150. The processor 302 may be operable to utilize the collected GNSS satellite data to build the reference database 304, which may be coupled internally or externally to the location server 300. The processor 302 may be operable to generate GNSS assistance data using the collected GNSS satellite data. The generated GNSS assistance data may comprise, depending on server capability, ephemeris data, LTO data, reference positions of interest and/or related time information. The processor 302 may be operable to provide the generated GNSS assistance data to users via a user-plane and/or a control-plane. For example, the processor 302 may be operable to receive requests for GNSS assistance data from, for example, the WLAN access point 200. In response, processor 302 may be operable to identify reference positions of the WLAN access point 200 from the reference database 304. The identified reference positions of the WLAN access point 122 together with, for example, ephemeris data, LTO data, and/or related time information may be communicated to the WLAN access point 200 as GNSS assistance data over the broadband IP network 130. The GNSS assistance data may be broadcasted by the WLAN access point 122 to wireless mobile devices within range such as, for example, the WLAN enabled mobile devices 122-124 and the Bluetooth enabled mobile devices 126-128. The broadcast GNSS assistance data may be utilized to determine location information of, for example, the WLAN enabled mobile devices 122-124 and the Bluetooth enabled mobile devices 126-128. The processor 302 may be operable to update or refine the reference database 304 using the determined location information.

The reference database 304 may comprise suitable logic, circuitry, interfaces and/or code that may be operable to store location information of associated communication devices such as, for example, the WLAN access point 200. The stored location information may be provided to associated communication devices such as the WLAN access point 200 when need to support LBS applications. The reference database 304 may be operable to refine and/or update the stored location information when need or periodically.

The memory 306 may comprise suitable logic, circuitry, interfaces and/or code that may be operable to store information such as executable instructions and data that may be utilized by the processor 302 and/or other associated component units such as, for example, the reference database 304. The memory 306 may comprise RAM, ROM, low latency nonvolatile memory such as flash memory and/or other suitable electronic data storage.

In an exemplary operation, the processor 302 may be operable to collect GNSS satellite data through the SRN 150 to build the reference database 304. The processor 302 may be operable to generate GNSS assistance data using the collected GNSS satellite data and store the generated GNSS assistance data in the reference database 304. In instances where one or more requests for GNSS assistance data may be received from, for example, the WLAN access point 200. The processor 302 may be operable to acquire GNSS assistance data for the WLAN access point 200 from the reference database 304. The acquired GNSS assistance data may comprise, for example, ephemeris data, LTO data, related location information of the WLAN access point 200 and/or time information. The related location information of the WLAN access point 200 may comprise, for example, the location and reference positions of the WLAN access point 200. The processor 302 may be operable to communicate the acquired GNSS assistance data to the WLAN access point 200 over the broadband IP network 130. The acquired GNSS assistance data may further be broadcast by the WLAN access point 200 to wireless mobile devices within range.

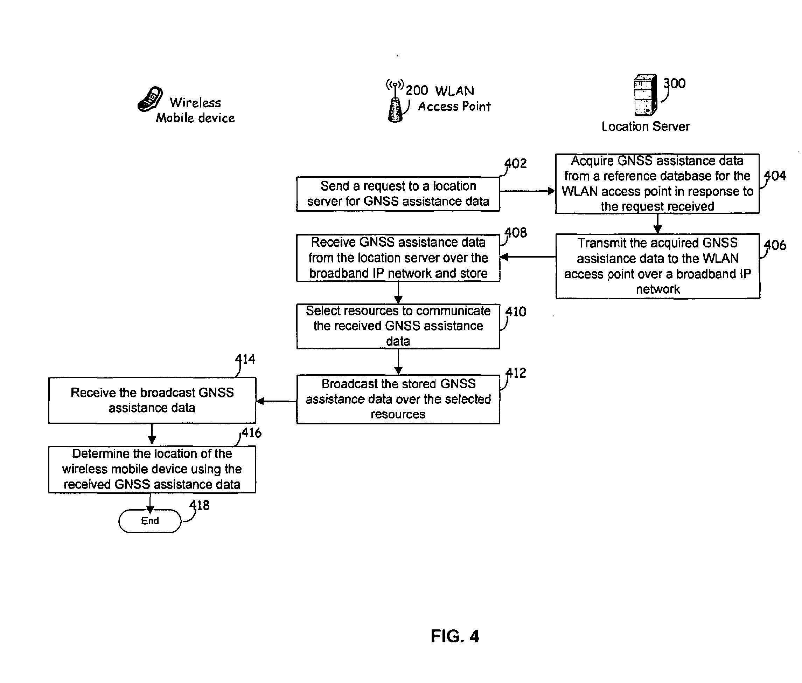

FIG. 4 is a flow chart illustrating an exemplary procedure that is utilized to provide GNSS assistance data via a wireless LAN access point, in accordance with an embodiment of the invention. Referring to FIG. 4, the exemplary steps may start with step 402. In step 402, the WLAN access point 200 may be operable to send a request to the location server 300 for GNSS assistance data. In step 404, the location server 300 may be operable to acquire GNSS assistance data from the reference database 304 for the WLAN access point 200 in response to the request received for GNSS assistance data. In step 406, the location server 300 may be operable to transmit the acquired GNSS assistance data to the WLAN access point 200 via the broadband IP network 130. In step 408, the WLAN access point 200 may be operable to receive GNSS assistance data from the location server 300 via the broadband IP network 130. The received GNSS assistance data may be stored in the local GNSS database 206. In step 410, the WLAN access point 200 may be operable to select available resources such as a field reserved in the Beacon Field on an operating WiFi channel for transmitting the stored GNSS assistance data to wireless mobile devices in range. In step 412, the WLAN access point 200 may be operable to broadcast the stored GNSS assistance data over the selected available resources to the wireless mobile devices within range. The wireless mobile device may comprise wireless mobile devices operating in 2.4 GHz ISM spectrum, for example, the WLAN enabled mobile devices 122-124 and/or the Bluetooth enabled mobile devices 126-128. In step 414, the wireless mobile devices within range may be operable to receive GNSS assistance data broadcasted by the WLAN access point 200. In step 414, the wireless mobile devices may be operable to calculate the corresponding location using the received broadcast GNSS assistance data to enhance LBS applications. The exemplary steps may end in step 418.

In various exemplary aspects of the method and system for providing GNSS assistance data via a wireless LAN access point, a wireless mobile device such as the WLAN enabled mobile device 122 and/or the Bluetooth enabled mobile device 126 that is within range of a WLAN access point such as the WLAN access point 200 may be operable to receive GNSS assistance data broadcasted from the WLAN access point 200. The GNSS assistance data are acquired by the WLAN access point 200 from a reference database such as the reference database 304 coupled to the location server 300. The broadcast GNSS assistance data may comprise ephemeris data, LTO data, location information related to the WLAN access point 200 and/or time information. The WLAN access point 200 may be operable to receive the acquired GNSS assistance data from the location server 300 over a broadband IP network such as the broadband IP network 130. The WLAN access point 200 may be operable to select available resources such as a field reserved in the Beacon Field on an operating WiFi channel for broadcasting the received GNSS assistance data. The WLAN access point 200 may be operable to broadcast the received GNSS assistance data over the selected resources to wireless mobile devices in range. The WLAN enabled mobile device 122 and/or the Bluetooth enabled mobile device 126 may be operable to receive the broadcast GNSS assistance data from the WLAN access point 200 over the selected resources. The WLAN enabled mobile device 122 and/or the Bluetooth enabled mobile device 126 may be operable to calculate its own location using the received broadcast GNSS assistance data. The calculated location of the WLAN enabled mobile device 122 and/or the Bluetooth enabled mobile device 126 may be communicated with the location server 300 so as to update or refine the reference database 304.

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for providing GNSS assistance data via a wireless LAN access point.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communication, the method comprising:
performing by one or more processors and/or circuits in a wireless mobile device, wherein whenever said wireless mobile device is within range of a wireless local area network (WLAN) access point:
receiving Global Navigation Satellite Systems (GNSS) assistance data broadcasted from said WLAN access point, wherein said GNSS assistance data are acquired by said WLAN access point from an associate network and/or a reference database that is communicatively coupled to a location server.

2. The method according to claim 1, wherein said wireless mobile device is a WLAN enabled mobile device and/or a Bluetooth enabled mobile device.

3. The method according to claim 1, wherein said broadcast GNSS assistance data comprise ephemeris data, long term orbit (LTO) data, location information related to said WLAN access point and/or time information.

4. The method according to claim 3, wherein said WLAN access point receives said acquired GNSS assistance data from said location server over a broadband IP network.

5. The method according to claim 4, wherein said WLAN access point selects available resources for broadcasting said received GNSS assistance data.

6. The method according to claim 5, wherein said WLAN access point broadcasts said received GNSS assistance data over said selected available resources.

7. The method according to claim 6, comprising receiving said broadcast GNSS assistance data from said WLAN access point over said selected available resources.

8. The method according to claim 7, comprising calculating location of said wireless mobile device using said received broadcast GNSS assistance data.

9. The method according to claim 8, comprising communicating said calculated location of said wireless mobile device to said location server.

10. The method according to claim 9, wherein said location server updates said reference database using said calculated location of said wireless mobile device.

11. A system for communication, the system comprising:
one or more processors and/or circuits for use in a wireless mobile device, wherein:
whenever said wireless mobile device is within range of a wireless local area network (WLAN) access point, said one or more processors and/or circuits are operable to receive Global Navigation Satellite Systems (GNSS) assistance data broadcasted from said WLAN access point; and
said GNSS assistance data are acquired by said WLAN access point from a reference database communicatively coupled to a location server.

12. The system according to claim 11, wherein said wireless mobile device is a WLAN enabled mobile device or a Bluetooth enabled mobile device.

13. The system according to claim 11, wherein said broadcast GNSS assistance data comprise ephemeris data, long term orbit (LTO) data, location information related to said WLAN access point and/or time information.

14. The system according to claim 13, wherein said WLAN access point receives said acquired GNSS assistance data from said location server over a broadband IP network.

15. The system according to claim 14, wherein said WLAN access point selects available resources for broadcasting said received GNSS assistance data.
